# EUROPÄISCHE PATENTSCHRIFT

(11) **EP 3 516 179 B1**
(45) Veröffentlichungstag und Bekanntmachung des Hinweises auf die Patenterteilung: **29.04.2020**
(21) Anmeldenummer: 17772388.9
(22) Anmeldetag: 22.09.2017
(51) Int. Cl.: F01K 23/10

(54) **VERFAHREN UND ANORDNUNG ZUR WÄRMEENERGIERÜCKGEWINNUNG IN ANLAGEN UMFASSEND WENIGSTENS EINEN REFORMER**
METHOD AND ARRANGEMENT FOR HEAT ENERGY RECOVERY IN SYSTEMS COMPRISING AT LEAST ONE REFORMER
PROCÉDÉ ET DISPOSITIF DE RÉCUPÉRATION D'ÉNERGIE THERMIQUE DANS DES INSTALLATIONS COMPRENANT AU MOINS UN REFORMEUR

(30) Priorität: 26.09.2016 DE 102016218438
(43) Veröffentlichungstag der Anmeldung: 31.07.2019
(73) Patentinhaber: thyssenkrupp Industrial Solutions AG, 45143 Essen (DE); thyssenkrupp AG, 45143 Essen (DE)
(72) Erfinder: DUMUR, Damien, 44139 Dortmund (DE); KROTOV, Denis, 44263 Dortmund (DE); BRÜCKNER, Bernd, 40217 Düsseldorf (DE); KURT, Josef, 58708 Menden (DE)
(74) Vertreter: thyssenkrupp Intellectual Property GmbH
(86) Internationale Anmeldenummer: PCT/EP2017/073969
(87) Internationale Veröffentlichungsnummer: WO 2018/055067

(56) Entgegenhaltungen:
- AT-B- 410 712
- DE-A1-102008 056 538
- DE-B3-102010 044 939

## Beschreibung

Die Erfindung betrifft ein Verfahren und eine Anordnung zur Wärmeenergierückgewinnung in Anlagen umfassend wenigstens einen Reformer, insbesondere in Synthesegasanlagen mit Dampfreformierung, bei welchen Anlagen zumindest die folgenden Prozessströme der Anlage verschaltet werden: Verbrennungsluft für den Reformer, Kesselspeisewasser zur Dampferzeugung, Prozesskondensat auf einer Abkühlstrecke der Anlage, und Rauchgas aus dem Reformer, wobei das Rauchgas und die Verbrennungsluft durch einen Rauchgaskanal geleitet werden, in welchem eine Wärmeenergierückgewinnung erfolgt. Insbesondere betrifft die Erfindung ein Verfahren und eine Anordnung gemäß dem Oberbegriff des jeweiligen unabhängigen Anspruchs.

Stromab von Reformern, insbesondere bei Dampfreformierungsprozessen, z.B. zur Herstellung von Wasserstoff, Ammoniak, Synthesegas, gibt es Bestrebungen, Wärmeenergie möglichst umfassend zu nutzen, insbesondere zwecks Steigerung der energetischen Effizienz einer Gesamtanlage. Eine effektive oder effiziente Nutzung insbesondere niederkalorischer Energie bzw. Wärme speziell in Synthesegasanlagen ist jedoch in vielen Fällen nicht auf einfache Weise realisierbar, insbesondere aufgrund hoher dafür erforderlicher Investitionen.

Die US-Patentanmeldung 2013/0213489 A1 beschreibt ein Verfahren und eine Anordnung zur Erzeugung von Prozessdampf und Kesselspeisewasserdampf in einem beheizbaren Reformer zur Herstellung von Synthesegas. Ebenso beschreibt die Patentschrift DE 10 2010 044 939 B3 eine solche Anordnung, wobei die Wärme des erzeugten Synthesegases vor der Konvertierung von Kohlenmonoxid zum Verdampfen des Prozesskondensates genutzt wird, und wobei vorgeschlagen wird, dem Prozesskondensat mittels eines Wärmetauschers Wärmeenergie zuzuführen, welcher Wärmetauscher stromab des Reformers und stromauf einer Hochtemperaturkonversionseinheit angeordnet ist.

US 4,897,999 A beschreibt ein Dampfkraftwerk mit mehreren Turbinen und mit mehreren Wärmetauscherstufen in einem Rauchgaskanal für Wärmetausch mit Kondensat/Wasser und mit mehreren Wärmetauscherstufen in einem Ofengaszuleitungskanal. Die Veröffentlichungen US 3,980,452 A, US 2011/0239864 A1, EP 2 103 569 A2, US 2008/0243310 A1, EP 2 233 433 A1, US 2007/0237710 A1 sowie DE 10 2008 056538 A1 beschreiben weitere Anordnungen zur Gasführung oder zum Wärmetausch, insbesondere im Zusammenhang mit Synthesegas-Gewinnung.

Aufgabe der Erfindung ist es, ein Verfahren bzw. eine Anordnung mit den eingangs beschriebenen Merkmalen zur Verfügung zu stellen, womit sich die energetische Effizienz von in Verbindung mit Reformierungsprozessen betriebenen Anlagen steigern lässt. Insbesondere soll die Nutzung Wärmeenergie bzw. niederkalorischer Energie derart erfolgen können, dass sich spürbare prozesstechnische Vorteile ergeben und das Energienutzungskonzept auch in finanzieller Hinsicht Anreize bietet.

Diese Aufgabe wird gelöst durch ein Verfahren zur Wärmeenergierückgewinnung in Anlagen umfassend wenigstens einen Reformer, insbesondere in Synthesegasanlagen mit Dampfreformierung, bei welchen Anlagen zumindest die folgenden Medien bzw. Prozessströme der Anlage verschaltet werden: Verbrennungsluft (VL) für den Reformer, Kesselspeisewasser (KSW) zur Dampferzeugung, insbesondere in einer Dampftrommel der Anlage, Prozesskondensat (PK) auf einer Abkühlstrecke der Anlage, welches Prozesskondensat von Synthesegas abgetrennt sein kann, und Rauchgas (RG) aus dem Reformer; wobei ein zumindest teilweises Verdampfen des Prozesskondensates auf der Abkühlstrecke erfolgt; wobei das Rauchgas durch einen Rauchgaskanal abgeleitet wird, in welchem eine Wärmeenergierückgewinnung erfolgt; und wobei die Verbrennungsluft vor der Zufuhr zum Reformer zwecks Wärmeenergierückgewinnung durch den Rauchgaskanal geleitet wird; wobei vorgeschlagen wird, dass zur Wärmeenergierückgewinnung das Prozesskondensat durch Wärmetausch mit in der Anlage generiertem Gas, insbesondere Synthesegas (bzw. Spaltgas oder Prozessgas), auf der Abkühlstrecke vorgewärmt und/oder verdampft wird, insbesondere ausschließlich, und dass die Verbrennungsluft vor einer im Rauchgaskanal erfolgenden Vorwärmung durch Wärmetausch mittels des Kesselspeisewassers vorgewärmt wird. Hierdurch wird das Ausnutzen vorhandener Wärmeenergie, insbesondere niederkalorischer Wärme erleichtert, insbesondere auch in Verbindung mit Kostensenkungen an Vorrichtungskomponenten (Wärmetauschern) oder bezüglich des Prozesses. Insbesondere kann eine Verringerung der Anzahl der Apparate bzw. deren Größe und folglich eine Senkung der Investitionskosten ermöglicht werden.

Niederkalorische Wärme des Kesselspeisewassers kann zur Vorwärmung der Verbrennungsluft ausgenutzt werden. Ferner kann dabei das abgekühlte Kesselspeisewasser insbesondere am Ende des Rauchgaskanals gegen relativ kaltes Rauchgas aufgewärmt werden. Es hat sich gezeigt, dass die erfindungsgemäße Verschaltung eine effizientere Nutzung niederkalorischer Energie des Kesselspeisewassers bzw. des Rauchgases ermöglicht. Ein Wärmetausch zwischen Kesselspeisewasser und Verbrennungsluft, insbesondere als erste Wärmetauscherstufe, ermöglicht eine flexible, unterschiedliche Verschaltungen bzw. mehrere Varianten der im Folgenden beschriebenen Anordnungen, um Abwärme effizient zu nutzen. Insbesondere hat es sich dabei als vorteilhaft erwiesen, wenn die komplette Prozesskondensat (PK)-Verdampfung in bzw. auf der Abkühlstrecke der Synthesegasanlage erfolgt. Dadurch kann beispielsweise auf eine PK-Trommel bzw. Dampftrommel verzichtet werden. Die Verdampfung kann in einem einzigen oder mehreren Apparaten erfolgen. Es hat sich gezeigt, dass eine solche Wärmeenergierückgewinnungsanordnung insbesondere in einer Synthesegas-/Wasserstoffanlage mit Zweidampfsystem verwendet werden kann.

Bei Wasserstoff-/Synthesegasanlagen mit einem Dampfsystem wird Kesselspeisewasser von einer Anlagengrenze zusammen mit Prozesskondensat aus dem Synthesegas in einer Trommel zusammengemischt. Bei einem Zweidampfsystem werden diese Prozessströme separat verdampft.

Einerseits kann die Optimierung auf der Abkühlstrecke erfolgen, andererseits auf dem Strömungspfad des Kesselspeisewassers und der Verbrennungsluft vor deren Zuführung oder Durchleitung durch den Rauchgaskanal. Gemäß einem der Ausführungsbeispiele kann der Strömungspfad des Kesselspeisewassers auch über die Abkühlstrecke geleitet werden, wie noch detaillierter beschrieben wird.

Dabei kann das Prozesskondensat auf der Abkühlstrecke und das optional bereits vorgewärmte Kesselspeisewasser (KSW) im Rauchgaskanal weiter vorgewärmt werden. Wahlweise kann auch das Kesselspeisewasser teilweise auf der Abkühlstrecke vorgewärmt werden, bevor es im Rauchgaskanal weiter aufgewärmt wird, insbesondere mittels wenigstens eines Economisers.

Aus diesen Betrachtungen wird ersichtlich, dass das Vorwärmen der Verbrennungsluft gegen Kesselspeisewasser eine Vielzahl von Optionen bei der effizienten Nutzung von Wärmeenergie liefert. Es hat sich gezeigt, dass die Wärme für das Kesselspeisewasser für hohe Effizienz an mehreren Stellen genutzt bzw. abgezogen werden kann, wobei ein/der Economiser unabhängig davon möglichst am Ende des Rauchgaskanals angeordnet ist.

Mittels der erfindungsgemäßen Verschaltung kann insbesondere bei Wasserstoffanlagen eine standardisierbare Anordnung zur effizienten Nutzung von Prozessenergie bereitgestellt werden, insbesondere im Zusammenhang mit der Synthesegasherstellung.

Anders ausgedrückt: Durch einzelne oder eine Kombination der folgenden Merkmale ein besonders vielversprechendes Energienutzungskonzept realisierbar ist.
1/ Prozesskondensat-Vorwärmung/-Verdampfung auf der Abkühlstrecke, insbesondere vollständig; und/oder
2/ Verbrennungsluft-Vorwärmung durch Wärmetausch mit Kesselspeisewasser; und/oder
3/ Vorwärmung der Verbrennungsluft gegen Kesselspeisewasser speziell in einer ersten Wärmetauscherstufe stromauf von optionalen zusätzlichen Wärmetauscherstufen; und/oder
4/ Kesselspeisewasser-Vorwärmung, insbesondere nach Wärmetausch mit Verbrennungsluft; und/oder
5/ Einbau/Anordnung wenigstens eines Economisers intern im Rauchgaskanal, zum Wärmetausch mit Kesselspeisewasser, und zur Entlastung von internen (Verbrennungs-)Luftvorwärmern.

Diese Maßnahmen können gemäß standardisierten Vorgaben einzeln oder in Kombination umgesetzt werden, je nach Anlagenkonfiguration. Dabei wird insbesondere ein Verkleinern von Wärmetauscherflächen im Rauchgaskanal (insbesondere bei mehreren intern im Rauchgaskanal angeordneten Luftvorwärmern) ermöglicht, einhergehend mit Kosteneinsparungen hinsichtlich Anlagenkomponenten.

Ferner hat sich gezeigt, dass die folgenden Verschaltungs-Aspekte das hier beschriebene Energienutzungskonzept als besonders effizient ausgestalten können, insbesondere auch in Kombination miteinander:
A/ Prozesskondensat wird ausschließlich in bzw. auf der Abkühlstrecke der (Synthesegas-)Anlage verdampft (vor und/oder nach einer CO-Konvertierung). Dies kann z.B. in zwei getrennten Apparaten oder in einem einzigen speziellen Kesselverdampfer erfolgen, der z.B. aus zwei Wärmetauschbündeln besteht.
B/ Frische Verbrennungsluft wird in wenigstens einem Kalorifier (externen Luftvorwärmer) vorgewärmt. Dabei wird das Kesselspeisewasser als Wärmemedium verwendet und abgekühlt, insbesondere in Serie in wenigstens zwei in Serie geschalteten Kalorifiern bzw. in Serie vom Kesselspeisewasser bzw. von Verbrennungsluft durchströmten Kalorifiern.
C/ Die Aufwärmung des Kesselspeisewassers erfolgt im Rauchgaskanal (insbesondere in einem Economiser), insbesondere an mehreren Stellen, bevorzugt am Ende des Rauchgaskanals. Optional kann auf der Abkühlstrecke zusätzlich noch eine Wärmezufuhr zum durch den Wärmetausch mit Verbrennungsluft abgekühlten Kesselspeisewasser erfolgen, insbesondere in einem mit Synthesegas beschickten KSW-Vorwärmer, bevor es zu einer Dampftrommel der Anlage geführt wird.

Ferner können erfindungsgemäß auch noch folgende Maßnahmen umgesetzt werden, jeweils wiederum einzeln oder in Kombination:
D/ Das abgekühlte Kesselspeisewasser wird auf zwei Ströme verteilt, wobei der erste Teilstrom zum/zu wenigstens einem Economiser im Rauchgaskanal geführt wird, und der zweite Teilstrom wird zum KSW-Vorwärmer auf der Abkühlstrecke geführt (parallele Verschaltung zur Aufwärmung des Kesselspeisewassers).
E/ Verwendung von zwei Kalorifiern, wobei das vom ersten Kalorifier austretende abgekühlte Kesselspeisewasser wieder aufgewärmt und anschließend zum zweiten Kalorifier geführt wird.

Dabei kann die weitere Aufwärmung des bereits vorgewärmten Kesselspeisewassers auf weitgehend frei definierbare Art und Weise im Rauchgaskanal erfolgen, je nach Anlagenkonfiguration. Für den Fall dass mehrere Kalorifier zum Einsatz kommen sollen, können diese weitgehend beliebig verschaltet bzw. angeordnet werden.

Die erfindungsgemäße Verschaltung, insbesondere die spezifische Anordnung des wenigstens einen Kalorifiers ermöglicht auch, die Rauchgasaustrittstemperatur am Kamin bzw. am Ende des Rauchgaskanals ohne spürbare Steigerung der Investitionskosten zu verringern, insbesondere auch in Verbindung mit Economisern. Insbesondere hat sich gezeigt, dass ein am Ende des Rauchgaskanals angeordneter Economiser eine höhere Effizienz und/oder Wirtschaftlichkeit ermöglicht als ein interner Luftvorwärmer, selbst für den Fall dass die Temperaturdifferenz (Pinch-Wert) kleiner ist als bei einem Luftvorwärmer in Form eines konventionellen Plattenwärmetauschers.

Ferner können weitere oder alle anderen Abschnitte des Rauchgaskanals bzw. im Rauchgaskanal angeordnete Bündel oder Wärmetauscher bei höheren Rauchgastemperaturen betrieben werden, was zu größeren Temperaturdifferenzen und damit effizienterer Wärmeübertragung führt (insbesondere bei den internen Luftvorwärmern), und wodurch die Investitionskosten gesenkt werden können.

Die Prozesskondensat-Verdampfung kann auf der Abkühlstrecke erfolgen, insbesondere ausschließlich. Ein Prozesskondensat-Verdampfer im Rauchgaskanal ist also nicht notwendigerweise vorhanden. Daher ist auch keine Dampftrommel für das Prozesskondensat erforderlich.

Es hat sich gezeigt, dass sich weitere anlagentechnische Vorteile ergeben können, wenn als Verdampfer für das Synthesegas ein Verdampfer des Typs Doppelbündelkesselverdampfer verwendet wird. Hierdurch können, insbesondere im Vergleich zu einem Umlaufkessel mit separater Trommel, Investitionskosten weiter gesenkt werden. Die Vorwärmung des Prozesskondensats im Rauchgaskanal bleibt unabhängig vom Verdampfer-Typ weiterhin möglich. Diesbezüglich kann noch erwähnt werden, dass eine Verdampfung des Prozesskondensats ausschließlich auf der Abkühlstrecke und in Verbindung mit einer Ausführung beider PK-Verdampfer als ein gemeinsames Bauteil mit einem einzigen Dampfraum und zwei Bündeln bei vielen Anlagenkonfigurationen maximale energetische Vorteile versprechen. Wahlweise kann Prozesskondensat auch teilweise im Rauchgaskanal verdampft werden, und/oder beide PK-Verdampfer können als getrennte Apparate bereitgestellt werden. Bei vielen Anlagenkonfigurationen könnten aber nicht dieselben energetischen Vorteile erzielt werden wie bei der Verdampfung ausschließlich auf der Abkühlstrecke im kombinierten PK-Verdampfer.

Es hat sich gezeigt, dass durch gezielte Konfiguration bzw. Auswahl von Verschaltungswegen für Kesselspeisewasser und Prozesskondensat sowie von Luftvorwärmungswegen eine sehr effiziente und/oder wirtschaftliche Anlagenkonfiguration realisierbar ist.

Als Abkühlstrecke ist dabei bevorzugt ein Abschnitt der gesamten Anlage oder Anordnung zu verstehen, auf welchem Synthesegas abgekühlt wird und Wasser bzw. Prozesskondensat vom Synthesegas abgetrennt werden soll, wobei möglichst viel Energie aus dem Synthesegas zurückgewonnen werden soll, beispielsweise durch auf der Abkühlstrecke angeordnete Wärmeübertrager. Die Abkühlstrecke erstreckt sich insbesondere stromab vom Reformer bis zur Prozesskondensat-Abscheidung in einem letzten von mehreren Abscheidern, bevor das Synthesegas weiter zu einer Druckwechseladsorptionseinheit geleitet wird.

Als Rauchgaskanal ist dabei bevorzugt eine Abführung von Rauchgas zu verstehen, welche zu einem Kamin führt oder diesen umfasst und dazu vorgehen ist, das von der Anlage erzeugte Rauchgas von der Anlage abzuführen.

Gemäß einer Ausführungsform erfolgt ein Wärmeübertrag vom Kesselspeisewasser auf die Verbrennungsluft, indem das Kesselspeisewasser und die Verbrennungsluft durch wenigstens einen extern vom Rauchgaskanal angeordneten externen Luftvorwärmer bzw. Kalorifier geleitet werden, bevor das Kesselspeisewasser zum Rauchgaskanal, insbesondere zum/zu einem darin angeordneten Economiser geleitet wird, bzw. weiter zu einer Dampftrommel geleitet wird. Die Verwendung von einem oder mehreren Luftvorwärmern/Kalorifiern ermöglicht eine große Flexibilität bei der Verschaltung. Der wenigstens eine Kalorifier kann dabei wahlweise mit einem externen KSW-Vorwärmer verbunden/verschaltet sein oder unabhängig davon sein. Anders ausgedrückt: Das Kesselspeisewasser kann dem wenigstens einen Kalorifier direkt zugeführt werden, oder via einen KSW-Vorwärmer zugeführt werden, wobei der KSW-Vorwärmer die erste Wärmetauscherstufe oder wahlweise auch eine zweite Wärmetauscherstufe für das Kesselspeisewasser bilden kann.

Anders ausgedrückt: Das Kesselspeisewasser wird zuerst durch einen Kalorifier geführt, wobei Verbrennungsluft vorgewärmt wird, bevor es zum/zu einem Economiser bzw. einem KSW-Vorwärmer in der Bauart eines Economisers im Rauchgaskanal geführt wird. Bei bestimmten Anlagenkonfigurationen kann es energetisch noch effektiver sein, die Führung des Kesselspeisewassers durch (wenigstens) zwei Kalorifier mit einem oder mehreren (jeweils) dazwischen angeordneten KSW-Vorwärmern vorzunehmen. Dieser bzw. wenigstens einer dieser KSW-Vorwärmer kann optional im Rauchgaskanal platziert werden (insbesondere als zweiter von zwei Economisern). Es hat sich gezeigt, dass unabhängig von der Anordnung oder Anzahl von Economisern ein besonders spürbarer energetischer Vorteil erzielt wird, wenn unmittelbar vor der Einführung des Kesselspeisewassers in einen/den zuletzt angeordneten Economiser (bei Bezugnahme auf die Richtung des Rauchgasstroms im Rauchgaskanal), also den am weitesten stromab angeordneten Economiser, das Kesselspeisewasser durch einen Kalorifier zur Luftvorwärmung geführt wird.

Als Kalorifier ist dabei ein Wärmetauscher zur Luftvorwärmung zu verstehen, der im Luftkanal angeordnet bzw. in den Luftströmungspfad integriert ist. Als ein Synonym zum Begriff Kalorifier kann hier auch der Begriff "externer Luftvorwärmer" (extern = extern vom Rauchgaskanal) verwendet werden.

Gemäß einer Ausführungsform wird das Kesselspeisewasser via einen intern im Rauchgaskanal angeordneten KSW-Vorwärmer bzw. Economiser geleitet, welcher bevorzugt am Ende des Rauchgaskanals angeordnet ist. Hierdurch kann eine große Wärmemenge durch das Kesselspeisewasser aufgenommen werden, und zwar an einer Stelle des Rauchgaskanals, an welcher das Rauchgas noch einen vergleichsweise hohen Wärmeinhalt aufweist. Die Wärmemenge des Rauchgases muss also nicht notwendigerweise durch interne Luftvorwärmer aufgenommen werden. Hierdurch ergeben sich weitere Variationsmöglichkeiten bei der Nutzung der Abwärme. Beispielsweise hat sich gezeigt, dass eine Anordnung wenigstens eines Economisers am Ende des Rauchgaskanals alle anderen im Rauchgaskanal angeordneten Wärmetauscherbündel schlanker machen kann, da bei diesen größere Temperaturdifferenzen zum Rauchgas (RG) genutzt werden können.

Insbesondere kann die Prozessführung derart erfolgen, dass das Kesselspeisewasser wärmer bzw. mit höherem Wärmeenergieinhalt in den Economiser hinein geleitet wird als z.B. Verbrennungsluft, wodurch auch die bisher häufig aufgetretene Problematik der rauchgasseitigen Unterschreitung des Schwefelsäuretaupunktes vermieden werden kann.

Es hat sich gezeigt, dass die Temperaturdifferenz (T-Pinch) zwischen dem Rauchgas und dem durch einen/den Economiser geführten Kesselspeisewasser entscheidenden Einfluss auf die Auslegung des Energienutzungskonzeptes hat, und dass es entscheidende Vorteile haben kann, diesen T-Pinch zu vergrößern. Um diesen T-Pinch zu vergrößern, wird hier vorgeschlagen, das Kesselspeisewasser vorab durch Luftvorwärmung in einem Kalorifier abzukühlen.

Bevorzugt ist ein verwendeter Economiser vergleichsweise groß bzw. für einen hohen Energieaustausch dimensioniert, so dass der Economiser eine beträchtliche Menge Energie aus dem Rauchgaskanal abführen kann. In diesem Zusammenhang ist eine Verdampfung des Prozesskondensats ausschließlich auf der Abkühlstrecke (Prozessweg) besonders effizient.

Als Economiser ist dabei bevorzugt eine Wärmeenergieaustauscheinrichtung für Energieeintrag in Speisewasser zu verstehen, welche ausgelegt oder optimiert ist für Energieübertrag von (Rauch-)Gas auf das Speisewasser bei vergleichsweise niedrigen Temperaturen des Gases, insbesondere bei Temperaturen von Rauchgas einer Synthesegasanlage, insbesondere in einem Bereich oder Abschnitt vor einem Kamin, also wenn das Rauchgas stromab der Reformer bereits abgekühlt ist. Als Economiser ist insbesondere ein im Rauchgaskanal angeordneter KSW-Vorwärmer zu verstehen, welcher von Rauchgas/Abgas durchströmt wird. Dabei kann die Vorwärmung insbesondere bis zur Sättigungstemperatur erfolgen.

Gemäß einer Ausführungsform wird das Rauchgas im Rauchgaskanal durch wenigstens einen intern im Rauchgaskanal angeordneten Luftvorwärmer geleitet, welcher stromauf vom/von einem intern im Rauchgaskanal angeordneten KSW-Vorwärmer bzw. Economiser angeordnet ist. Hierdurch können sich Synergieeffekte bei der Nutzung bisheriger und neuer Anlagenkomponenten ergeben.

Als interner Luftvorwärmer ist dabei ein im Rauchgaskanal angeordneter Wärmetauscher bzw. Wärmetauscherbündel zu verstehen, welcher/welches ausgelegt oder optimiert ist für Wärmetausch zwischen zwei Gasen, speziell Rauchgas und Verbrennungsluft.

Gemäß einer Ausführungsform erfolgt die Vorwärmung oder Verdampfung des PK, bevorzugt vollständig bzw. ausschließlich, auf der Abkühlstrecke in einem Kesselverdampfer umfassend zwei Wärmetauschereinheiten und einen gemeinsamen Dampfraum. Hierdurch kann eine effiziente Wärmenutzung erfolgen. Zudem lässt sich auch apparativer Aufwand einsparen.

Gemäß einer Ausführungsform wird das Kesselspeisewasser in wenigstens einem externen KSW-Vorwärmer aufgewärmt, bevor es insbesondere via einen weiteren externen Luftvorwärmer bzw. Kalorifier zum Rauchgaskanal geleitet wird, insbesondere in einem auf der Abkühlstrecke angeordneten KSW-Vorwärmer mittels Prozessgas bzw. Synthesegas. Hierdurch kann eine Verknüpfung der Wärmeenergienutzung auf der Abkühlstrecke und auf dem Strömungspfad des Kesselspeisewassers erfolgen. Anders ausgedrückt: Das Kesselspeisewasser wird nach Wärmetausch mit der Verbrennungsluft vorgewärmt, bevor es via den Rauchgaskanal geleitet wird. Das Kesselspeisewasser kann dabei/danach zu einem/zum intern im Rauchgaskanal angeordneten Economiser geleitet werden, insbesondere unmittelbar nachdem es den weiteren Kalorifier verlässt.

Als externer KSW-Vorwärmer ist dabei bevorzugt ein extern vom Rauchgaskanal angeordneter Wärmetauscher eingerichtet zum Wärmetausch zwischen Kesselspeisewasser und einem insbesondere gasförmigen Fluid, speziell Synthesegas zu verstehen. Das Fluid bzw. Synthesegas kann dabei auch auskondensierbare, flüssige Bestandteile, insbesondere Wasser enthalten. Der KSW-Vorwärmer kann z.B. als Rohrbündel-Wärmetauscher ausgebildet sein und durch Synthesegas mit Wärme beaufschlagt werden.

Gemäß einer Ausführungsform wird das Kesselspeisewasser stromab vom (ersten) externen Luftvorwärmer bzw. Kalorifier in zwei parallele Teilströme zum Vorwärmen des Kesselspeisewassers unterteilt, nämlich in einen Teilstrom zum/zu einem intern im Rauchgaskanal angeordneten KSW-Vorwärmer bzw. Economiser sowie in einen Teilstrom zum externen KSW-Vorwärmer, insbesondere auf der Abkühlstrecke. Hierdurch kann die Aufwärmung des Kesselspeisewassers auf zwei Wegen auf besonders flexible Weise erfolgen, je nach Betriebszustand.

Gemäß einer Ausführungsform wird das vom/von einem ersten externen Luftvorwärmer bzw. Kalorifier austretende gekühlte Kesselspeisewasser wieder aufgewärmt und anschließend zu einem weiteren externen Luftvorwärmer bzw. Kalorifier geführt, in welchem erneuter Wärmetausch mit der Verbrennungsluft erfolgt. Hierdurch kann die Verbrennungsluft auf noch effizientere Weise vorgewärmt werden, insbesondere unter Zwischenschaltung einer Vorwärm-Stufe für das Kesselspeisewasser. Dabei kann die Wiederaufwärmung des Kesselspeisewassers auf weitgehend beliebige Art und Weise auf der Abkühlstrecke oder im Rauchgaskanal erfolgen. Für den Fall mehrerer Kalorifier können diese weitgehend beliebig verschaltet bzw. angeordnet werden.

Gemäß einer Ausführungsform ist der KSW-Vorwärmer ein auf der Abkühlstrecke angeordneter Wärmetauscher, über welchen das in der Anlage generierte Gas, insbesondere Synthesegas, geleitet wird. Hierdurch können die Abkühlstrecke und die Zuführung von Kesselspeisewasser bzw. Verbrennungsluft wärmetechnisch miteinander verknüpft werden. Die Wärmeenergie kann dann auf besonders flexible oder effiziente Weise genutzt werden.

Die zuvor genannte Aufgabe wird erfindungsgemäß auch gelöst durch eine Logikeinheit eingerichtet zum Ausführen eines zuvor beschriebenen Verfahrens, und eingerichtet zur Steuerung von Volumenströmen bzw. zum Schalten von Anlagenkomponenten an wenigstens einem externen Luftvorwärmer bzw. Kalorifier, durch welchen das Kesselspeisewasser und Verbrennungsluft zum Vorwärmen der Verbrennungsluft geleitet werden. Hierdurch ergeben sich zuvor genannte Vorteile.
Die zuvor genannte Aufgabe wird erfindungsgemäß auch gelöst durch eine Wärmeenergierückgewinnungsanordnung für Anlagen umfassend wenigstens einen Reformer, insbesondere für Synthesegasanlagen mit Dampfreformierung, bei welchen Anlagen zumindest die folgenden Medien bzw. Prozessströme der Anlage verschaltet sind: Verbrennungsluft für den Reformer, Kesselspeisewasser zur Dampferzeugung, insbesondere in einer Dampftrommel der Anlage, Prozesskondensat auf einer Abkühlstrecke der Anlage, und Rauchgas aus dem Reformer, welches durch einen Rauchgaskanal abgeleitet wird; wobei die Wärmeenergierückgewinnungsanordnung umfasst: wenigstens einen extern vom Rauchgaskanal angeordneten Luftvorwärmer bzw. Kalorifier für die Verbrennungsluft; wenigstens einen Wärmetauscher für das Prozesskondensat oder das Kesselspeisewasser; wobei auf der Abkühlstrecke ein Wärmetauscher für das Prozesskondensat angeordnet ist, welcher zur Wärmeenergierückgewinnung, insbesondere ausschließlich, durch Wärmetausch mit in der Anlage generiertem Gas, insbesondere Synthesegas, eingerichtet ist, und dass der externe Luftvorwärmer bzw. Kalorifier zum Wärmetausch zwischen dem Kesselspeisewasser und der Verbrennungsluft vor deren Vorwärmung im Rauchgaskanal eingerichtet und angeordnet ist. Hierdurch ergeben sich zuvor genannte Vorteile. Gemäß einem Ausführungsbeispiel ist der Wärmetauscher für das Prozesskondensat ein Kesselverdampfer, der zwei Bündel und einen (einzigen) gemeinsamen Dampfraum aufweist.

Gemäß einem Ausführungsbeispiel ist intern im Rauchgaskanal wenigstens ein KSW-Vorwärmer bzw. Economiser angeordnet, insbesondere in einer Position möglichst weit stromab, insbesondere am Ende des Rauchgaskanals, welcher KSW-Vorwärmer im Strömungspfad des Rauchgases angeordnet ist. Hierdurch ergeben sich zuvor beschriebene Vorteile.

Gemäß einem Ausführungsbeispiel ist stromauf vom internen KSW-Vorwärmer bzw. Economiser ein weiterer Kalorifier angeordnet. Insbesondere umfasst die Anordnung einen auf der Abkühlstrecke angeordneten KSW-Vorwärmer, eingerichtet für Wärmetausch zwischen dem Kesselspeisewasser und Prozessgas bzw. Synthesegas, insbesondere stromab vom externen (ersten) Luftvorwärmer. Hierdurch kann, wie erwähnt, die Verbrennungsluft noch effizienter aufgewärmt werden, insbesondere durch Kopplung der Zuführung der Verbrennungsluft bzw. des Kesselspeisewassers mit der Abkühlstrecke. Einige der hier beschriebenen Vorteile können bereits durch die beschriebene Anordnung von wenigstens einem Kalorifier und des Economiser am Ende des Rauchgaskanals realisiert werden. Da sowohl die Vorwärmung der Verbrennungsluft als auch die Verdampfung des Prozesskondensats auf der Abkühlstrecke erfolgen können, mit einer Verdampfung des Prozesskondensats insbesondere ausschließlich komplett durch Synthesegas, kann das Prozesskondensat-System vergleichsweise kompakt ausgeführt werden und einfach aufgebaut sein, insbesondere bei günstiger Aufstellung, übersichtlicher Verrohrung, und/oder in Stahlbauweise.

Die zuvor genannte Aufgabe wird erfindungsgemäß auch gelöst durch Verwendung einer Wärmeenergierückgewinnungsanordnung in Anlagen umfassend wenigstens einen Reformer, insbesondere einer zuvor beschriebenen Wärmeenergierückgewinnungsanordnung, für die Vorwärmung von Verbrennungsluft mittels Kesselspeisewasser stromauf von einem Rauchgaskanal der Anlage mittels wenigstens eines extern vom Rauchgaskanal angeordneten externen Luftvorwärmers, bevor die Verbrennungsluft in oder via den Rauchgaskanal geleitet wird, insbesondere in Verbindung mit einer Vorwärmung des Kesselspeisewasser mittels Prozessgas auf einer Abkühlstrecke der Anlage, insbesondere bei Dampfreformierungsprozessen, insbesondere in einer Synthesegas-/Wasserstoffanlage mit Zweidampfsystem. Hierdurch ergeben sich zuvor beschriebene Vorteile. Die Verwendung kann insbesondere auch in Dampfreformierungsprozessen in einer Synthesegas-/Wasserstoffanlage mit Eindampfsystem erfolgen.

Weitere Merkmale und Vorteile der Erfindung ergeben sich aus der Beschreibung von Ausführungsbeispielen anhand von Zeichnungen, sowie aus den Zeichnungen selbst. Dabei zeigt
- Fig. 1A, 1B: jeweils in schematischer Darstellung eine Wärmerückgewinnungsanordnung gemäß einem der Ausführungsbeispiele bzw. deren Verschaltung mit einer Anlage,
- Fig. 2A, 2B: jeweils in schematischer Darstellung eine Wärmerückgewinnungsanordnung gemäß einem weiteren der Ausführungsbeispiele bzw. deren Verschaltung mit einer Anlage,
- Fig.3: in schematischer Darstellung eine Wärmerückgewinnungsanordnung gemäß einem weiteren der Ausführungsbeispiele bzw. deren Verschaltung mit einer Anlage.

Bei Bezugszeichen, die nicht explizit in Bezug auf eine einzelne Figur beschrieben werden, wird auf die jeweils andere Figur verwiesen.

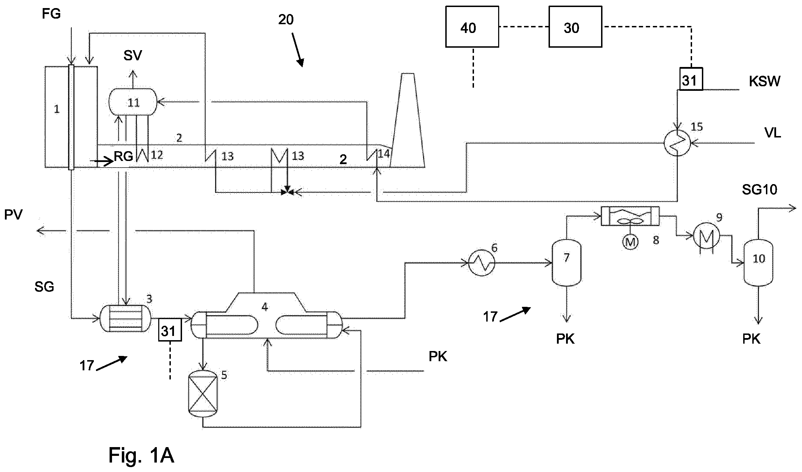

Die Fig. 1A zeigt eine Anordnung 20 mit einem Kalorifier 15 und einem am Ende eines Rauchgaskanals 2 einer Synthesegasanlage angeordneten Economiser 14. Einem Reformer 1 wird Gas FG zugeführt, welches in einen Prozessgas-Strom SG und einen Dampf-Anteil aufgesplittet wird. Ein Rauchgas-Strom RG entsteht bei der Verbrennung von Brennstoffen mit Verbrennungsluft VL. Kesselspeisewasser KSW wird im Wärmetausch mit Verbrennungsluft VL durch den Kalorifier 15 geführt. Das Kesselspeisewasser gelangt insbesondere von der Anlagengrenze bzw. von einer Wasseraufbereitungseinheit oder von einem Deaerator/Stripper zum Kalorifier 15. Das durch Wärmetausch mit der Verbrennungsluft abgekühlte Kesselspeisewasser wird anschließend im Economiser 14 ganz am Ende des Rauchgaskanals wieder aufgewärmt und schließlich zu einer Dampftrommel 11 geführt, aus welcher Sattdampf SV abgeführt wird. Die Dampftrommel 11 ist mit einem im Rauchgaskanal 2 angeordneten KSW-Verdampfer 12 verbunden. Bei bestimmten Anlagenkonfigurationen kann dieser KSW-Verdampfer 12 auch entfallen. Stromauf vom Economiser 14 und stromab vom KSW-Verdampfer 12 sind zwei oder mehr interne Luftvorwärmer 13 angeordnet, die dank des Economisers 14 bei höheren Rauchgastemperaturen betrieben werden können, was zu Kostensenkungen beiträgt.

Auf der Abkühlstrecke 17 ist ein Verdampfer 4 für Prozesskondensat PK angeordnet, aus welchem Prozessdampf PV abgeführt wird. Der PK-Verdampfer 4 umfasst zwei Wärmetauscher/Bündel, welche in einer gemeinsamen Trommel bzw. einem gemeinsamen Dampfraum die PK-Verdampfung in einem einzigen Apparat ermöglichen können. Stromauf davon wird Prozessgas bzw. Synthesegas SG vom Reformer 1 über einen Gaskühler 3 geleitet. Nach dem ersten Bündel wird Synthesegas zu einem CO-Shift-Reaktor 5 bzw. zu einer Wassergas-Shift-Reaktion geführt. Diese/r kann eine Hoch-Temperatur-Konvertierung (High Temperature Shift HTS), oder MT (middle temperature)-Shift, oder HT-LT (low temperature)-Shift umfassen. Durch eine CO-Shift-Reaktion (bzw. Wassergas-Shift-Reaktion) steigt die Synthesegastemperatur wieder und kann durch das zweite Bündel im Verdampfer 4 zur PK-Verdampfung genutzt werden. Dadurch ergeben sich Vorteile wie z.B. Materialersparnis, kleinerer benötigter Dampfraum, weniger Rohrleitungen, weniger Mess-/Steuerungstechnik, insbesondere da keine Verschaltung mehrerer separater Verdampfer erforderlich ist.

Stromab vom Verdampfer 4 ist wenigstens ein externer Wärmetauscher 6 angeordnet, via welchen das Prozessgas SG geleitet werden kann. Dieser wenigstens eine Wärmetauscher 6 kann, je nach Anlagenkonfiguration, für unterschiedliche Zwecke genutzt werden. Dabei können als beispielhafte Arten von Wärmetauschern 6 in dieser Anordnung nicht abschließend insbesondere genannt werden: Brennstoff-Vorwärmer, Dampf-Generator, Einsatzgas (Feed)-Vorwärmer, PSA-Offgas-Vorwärmer, KSW-Vorwärmer, PK-Vorwärmer.

Die in Fig. 1A gezeigten, auf einer sich vom Reformer 1 bis zur Synthesegas-Abführung SG10 erstreckenden Abkühlstrecke 17 angeordneten ersten und zweiten Abscheider 7, 10 müssen nicht notwendigerweise in exakt dieser Anordnung oder Anzahl bereitgestellt werden. Wahlweise werden ein oder mehrere derartige Abscheider auf der Abkühlstrecke 17 angeordnet. Nicht genutzte Wärme kann durch einen Luftkühler 8 und einen Wasserkühler bzw. Schlusskühler 9 aufgenommen werden.

Eine Logikeinheit 40 steht in Verbindung mit z.B. Ventilen, Armaturen, Wärmetauschern und/oder Durchflussreglern der Anordnung 20, ferner mit einer Messeinrichtung 30, welche wenigstens eine Sensoreinheit 31 (z.B. zur Erfassung von Temperatur, Druck, Volumenstrom) umfasst, die jeweils an einer der Armaturen angeordnet sein kann. Die Anordnung der Sensoreinheit 31 ist hier nur exemplarisch. Insbesondere können an den weiteren Anlagenkomponenten auch jeweils Sensoreinheiten 31 angeordnet sein.

Ein Zweidampfsystem kann dabei insbesondere durch die folgenden Komponenten bereitgestellt werden: Prozessgaskühler 3, Dampftrommel 11, KSW-Verdampfer 12 für die KSW-Verdampfung, und PK-Verdampfer 4 für die PK-Verdampfung.

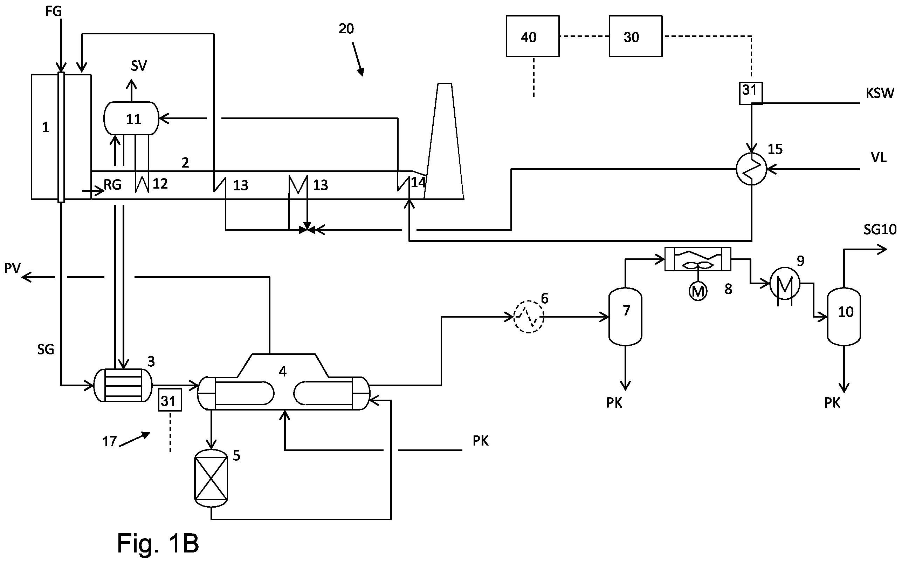

Die Fig. 1B zeigt in Abwandlung zu Fig. 1A eine Anordnung, bei welcher der Wärmetauscher 6 optional entfallen kann, je nach Anlagenkonfiguration.

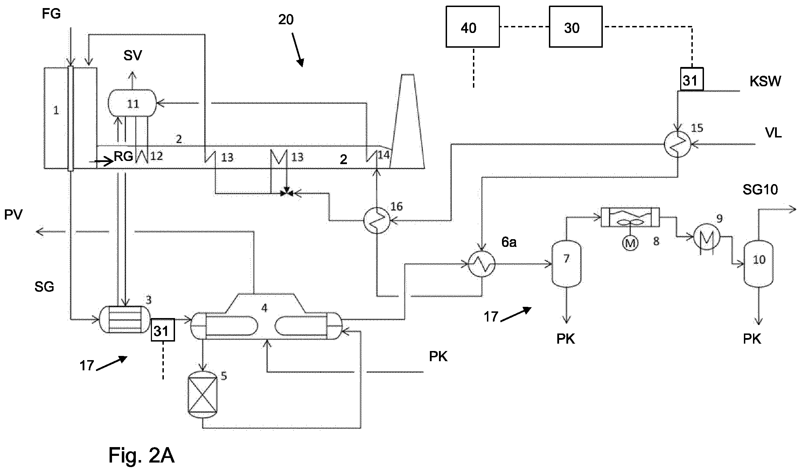

Die Fig. 2A zeigt eine Anlagenkonfiguration mit zwei Kalorifiern 15, 16, welche Anordnung eine erste Kesselspeisewasser-Vorwärmung auf der Abkühlstrecke 17 und eine zweite Kesselspeisewasser-Aufwärmung im Economiser 14 am Ende des Rauchgaskanals 2 ermöglicht. Das Kesselspeisewasser kann an zwei Stellen aufgewärmt werden, wodurch die Abkühlstrecke 17 mit der dem Strömungspfad der Verbrennungsluft verknüpft wird. Die Fig. 2A zeigt in Abwandlung zur Fig. 1A einen KSW-Vorwärmer 6a und einen zweiten Kalorifier 16 stromab vom KSW-Vorwärmer 6a. Die weiteren hier nicht im Detail beschriebenen Prozessströme können auf vergleichbare Art und Weise erfolgen bzw. angeordnet sein wie in Fig. 1A beschrieben. Die in Fig. 2A gezeigte Anordnung verspricht eine besonders hohe Energieeinsparung bzw. eine besonders effiziente Nutzung niederkalorischer Energie.

Eine Vorwärmung des Kesselspeisewassers kann auch dadurch unterstützt werden, dass im Rauchgaskanal 2 ein zusätzlicher Economiser angeordnet wird. Wahlweise ist es auch möglich, z.B. einen dritten Kalorifier (nicht dargestellt) einzusetzen, wobei das Kesselspeisewasser zwischen dem zweiten Kalorifier 16 und dem dritten Kalorifier dann nochmals vorgewärmt werden könnte. Stromauf vom KSW-Vorwärmer 6a könnte also zwischen dem KSW-Vorwärmer 6a und dem Abscheider 7 ein weiterer Kalorifier angeordnet und ein weiterer KSW-Vorwärmer sein.

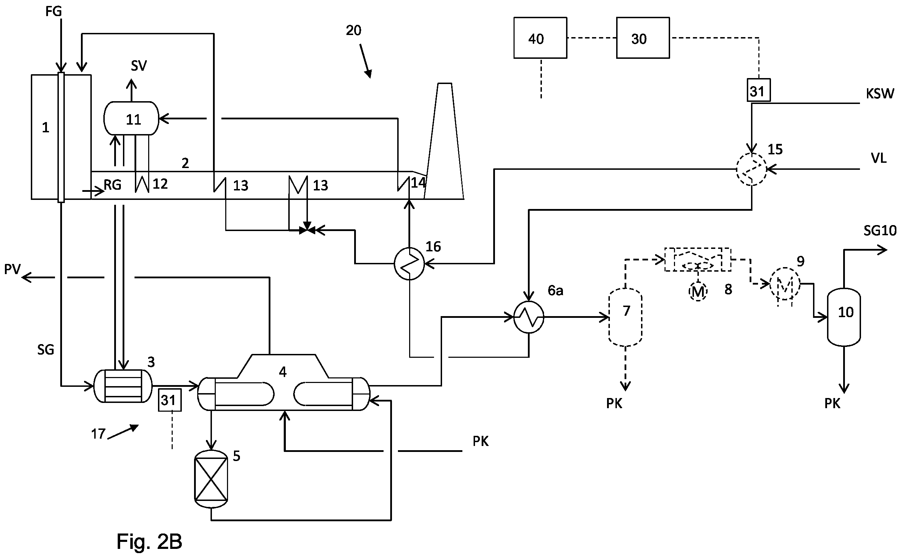

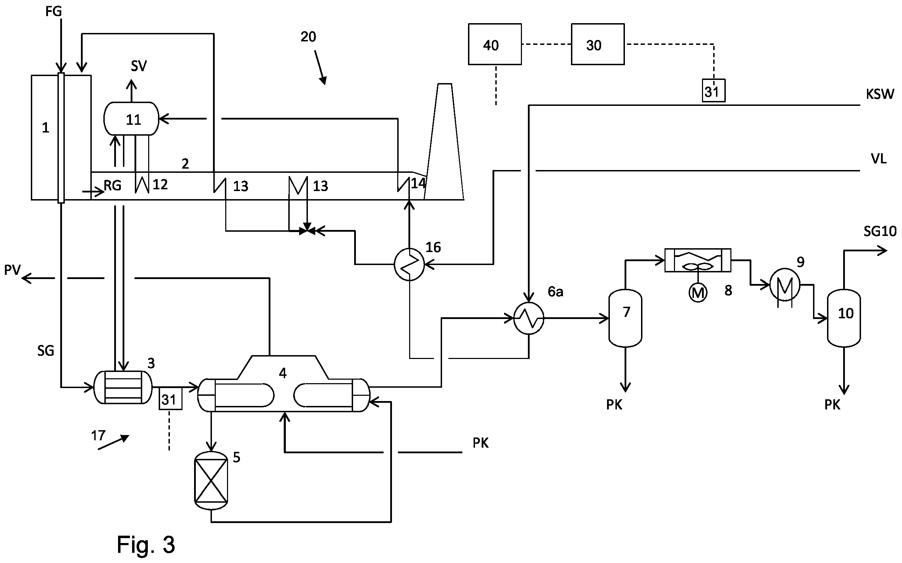

Die Fig. 2B zeigt in Abwandlung zu Fig. 1A, 1B, 2A eine Anordnung, bei welcher optional auf den ersten Kalorifier 15 und optional auch auf weitere Komponenten (gestrichelt dargestellt) verzichtet wird. Die Fig. 3 zeigt in Abwandlung zu Fig. 2A, 2B eine Anordnung, bei welcher das Kesselspeisewasser jedenfalls zunächst zur Vorwärmung zur Abkühlstrecke 17 geführt wird, bevor ein Wärmetausch mit Verbrennungsluft erfolgt.

### Bezuqszeichenliste

- 1: Reformer
- 2: Rauchgaskanal (Convection Bank)
- 3: Prozessgaskühler
- 4: PK-Verdampfer, insbesondere mit zwei Bündeln
- 5: CO-Shift-Reaktor bzw. Hoch-Temperatur-Konvertierung (High Temperature Shift HTS), oder MT-Shift, oder HT-LT-Shift
- 6: externer Wärmetauscher (Fig. 1A, 1B)
- 6a: (externer) KSW-Vorwärmer (Fig. 2A, 2B; Fig. 3)
- 7: erster Abscheider bzw. PK-Abscheider (Hot Separator)
- 8: Luftkühler
- 9: Schlusskühler bzw. Wasserkühler
- 10: zweiter Abscheider bzw. PK-Abscheider (Cold Separator)
- 11: Dampftrommel (zur KSW-Verdampfung)
- 12: KSW-Verdampfer
- 13: intern im Rauchgaskanal angeordneter Luftvorwärmer
- 14: Economiser bzw. interner Vorwärmer für KSW
- 15: erster Kalorifier, insbesondere externer Luftvorwärmer
- 16: weiterer Kalorifier, insbesondere externer Luftvorwärmer (Fig. 2A, 2B; 3)
- 17: Abkühlstrecke
- 20: Wärmeenergierückgewinnungsanordnung
- 30: Messeinrichtung
- 31: Sensoreinheit
- 40: Logikeinheit
- FG: Feed/Dampf-Mischung
- KSW: Kesselspeisewasser
- PK: Prozesskondensat
- PV: Prozessdampf
- RG: Rauchgas
- SG: Synthesegas bzw. Spaltgas bzw. Prozessgas
- SG10: abgeleiteter Synthesegas-Strom, optional zur Druckwechseladsorptionseinheit (Pressure Swing Adsorption PSA)
- SV: Sattdampf
- VL: Verbrennungsluft

## Patentansprüche

1. Verfahren zur Wärmeenergierückgewinnung in Anlagen umfassend wenigstens einen Reformer (1), insbesondere in Synthesegasanlagen mit Dampfreformierung, bei welchen Anlagen zumindest die folgenden Prozessströme der Anlage verschaltet werden: Verbrennungsluft (VL) für den Reformer, Kesselspeisewasser (KSW) zur Dampferzeugung, Prozesskondensat (PK) auf einer Abkühlstrecke (17) der Anlage, und Rauchgas (RG) aus dem Reformer; wobei ein zumindest teilweises Verdampfen des Prozesskondensates auf der Abkühlstrecke erfolgt; wobei das Rauchgas durch einen Rauchgaskanal (2) abgeleitet wird, in welchem eine Wärmeenergierückgewinnung erfolgt;
und wobei die Verbrennungsluft vor der Zufuhr zum Reformer zwecks Wärmeenergierückgewinnung durch den Rauchgaskanal geleitet wird;
**dadurch gekennzeichnet, dass** zur Wärmeenergierückgewinnung das Prozesskondensat (PK) durch Wärmetausch mit in der Anlage (1) generiertem Gas, insbesondere Synthesegas (SG), auf der Abkühlstrecke (17) vorgewärmt und/oder verdampft wird, und dass die Verbrennungsluft (VL) vor einer im Rauchgaskanal (2) erfolgenden Vorwärmung durch Wärmetausch mittels des Kesselspeisewassers (KSW) vorgewärmt wird.

2. Verfahren nach Anspruch 1, wobei ein Wärmeübertrag vom Kesselspeisewasser (KSW) auf die Verbrennungsluft (VL) erfolgt, indem das Kesselspeisewasser und die Verbrennungsluft durch wenigstens einen extern vom Rauchgaskanal angeordneten externen Luftvorwärmer (15, 16) geleitet werden, bevor das Kesselspeisewasser zum Rauchgaskanal (2) geleitet wird.

3. Verfahren nach Anspruch 1 oder 2, wobei das Kesselspeisewasser (KSW) via einen intern im Rauchgaskanal (2) angeordneten KSW-Vorwärmer (14) geleitet wird, welcher bevorzugt am Ende des Rauchgaskanals angeordnet ist.

4. Verfahren nach einem der vorhergehenden Ansprüche, wobei das Rauchgas (RG) im Rauchgaskanal (2) durch wenigstens einen intern im Rauchgaskanal angeordneten Luftvorwärmer (13) geleitet wird, welcher stromauf vom/von einem intern im Rauchgaskanal angeordneten KSW-Vorwärmer (14) angeordnet ist.

5. Verfahren nach einem der vorhergehenden Ansprüche, wobei die Vorwärmung oder Verdampfung des Prozesskondensates (PK) auf der Abkühlstrecke (17) in einem Kesselverdampfer (4) umfassend zwei Wärmetauschereinheiten und einen gemeinsamen Dampfraum erfolgt.

6. Verfahren nach einem der vorhergehenden Ansprüche, wobei das Kesselspeisewasser (KSW) in wenigstens einem externen KSW-Vorwärmer (6a) aufgewärmt wird, bevor es insbesondere via einen weiteren externen Luftvorwärmer (16) zum Rauchgaskanal (2) geleitet wird, insbesondere in einem auf der Abkühlstrecke (17) angeordneten KSW-Vorwärmer (6a) mittels Prozessgas.

7. Verfahren nach dem vorhergehenden Anspruch, wobei das Kesselspeisewasser (KSW) stromab vom externen Luftvorwärmer (15, 16) in zwei parallele Teilströme zum Vorwärmen des Kesselspeisewassers unterteilt wird, nämlich in einen Teilstrom zum/zu einem intern im Rauchgaskanal angeordneten KSW-Vorwärmer (14) sowie in einen Teilstrom zum externen KSW-Vorwärmer (6a), insbesondere auf der Abkühlstrecke (17).

8. Verfahren nach einem der vorhergehenden Ansprüche, wobei das vom/von einem ersten externen Luftvorwärmer (15) austretende gekühlte Kesselspeisewasser wieder aufgewärmt und anschließend zu einem weiteren externen Luftvorwärmer (16) geführt wird, in welchem erneuter Wärmetausch mit der Verbrennungsluft (VL) erfolgt.

9. Verfahren nach einem der drei vorhergehenden Ansprüche, wobei der KSW-Vorwärmer (6a) ein auf der Abkühlstrecke (17) angeordneter Wärmetauscher ist, über welchen das in der Anlage generierte Gas, insbesondere Synthesegas (SG), geleitet wird.

10. Logikeinheit (40) eingerichtet zum Ausführen eines Verfahrens nach einem der vorhergehenden Verfahrensansprüche, eingerichtet zur Steuerung von Volumenströmen oder zum Schalten von Anlagenkomponenten an wenigstens einem externen Luftvorwärmer (15, 16), durch welchen Kesselspeisewasser (KSW) und Verbrennungsluft (VL) zum Vorwärmen der Verbrennungsluft (VL) geleitet werden.

11. Wärmeenergierückgewinnungsanordnung (20) für Anlagen umfassend wenigstens einen Reformer (1), insbesondere für Synthesegasanlagen mit Dampfreformierung, bei welchen Anlagen zumindest die folgenden Prozessströme der Anlage verschaltet sind: Verbrennungsluft (VL) für den Reformer, Kesselspeisewasser (KSW) zur Dampferzeugung, Prozesskondensat (PK) auf einer Abkühlstrecke (17) der Anlage, und Rauchgas (RG) aus dem Reformer, welches durch einen Rauchgaskanal (2) abgeleitet wird; wobei die Wärmeenergierückgewinnungsanordnung (20) umfasst:
wenigstens einen extern vom Rauchgaskanal angeordneten Luftvorwärmer (15, 16) für die Verbrennungsluft;
wenigstens einen Wärmetauscher (4, 6; 6a) für das Prozesskondensat oder das Kesselspeisewasser;
**dadurch gekennzeichnet, dass** auf der Abkühlstrecke (17) ein Wärmetauscher (4) für das Prozesskondensat (PK) angeordnet ist, welcher zur Wärmeenergierückgewinnung durch Wärmetausch mit in der Anlage generiertem Gas, insbesondere Synthesegas (SG), eingerichtet ist, und dass der externe Luftvorwärmer (15, 16) zum Wärmetausch zwischen dem Kesselspeisewasser (KSW) und der Verbrennungsluft (VL) vor deren Vorwärmung im Rauchgaskanal (2) eingerichtet und angeordnet ist.

12. Wärmeenergierückgewinnungsanordnung (20) nach dem vorhergehenden Vorrichtungsanspruch, wobei der Wärmetauscher (4) für das Prozesskondensat (PK) ein Kesselverdampfer ist, der zwei Bündel und einen gemeinsamen Dampfraum aufweist.

13. Wärmeenergierückgewinnungsanordnung nach einem der vorhergehenden Vorrichtungsansprüche, wobei intern im Rauchgaskanal (2) wenigstens ein KSW-Vorwärmer (14) angeordnet ist, insbesondere stromab am Ende des Rauchgaskanals, welcher KSW-Vorwärmer im Strömungspfad des Rauchgases (RG) angeordnet ist.

14. Wärmeenergierückgewinnungsanordnung nach einem der vorhergehenden Vorrichtungsansprüche, wobei stromauf von einem/vom internen KSW-Vorwärmer (14) ein weiterer externer Luftvorwärmer (16) angeordnet ist; und/oder mit einem auf der Abkühlstrecke (17) angeordneten Kesselspeisewasser-Vorwärmer (6a), eingerichtet für Wärmetausch zwischen dem Kesselspeisewasser und Prozessgas, insbesondere stromab vom externen (ersten) Luftvorwärmer (15).

15. Verwendung einer Wärmeenergierückgewinnungsanordnung in Anlagen umfassend wenigstens einen Reformer (1), insbesondere einer Wärmeenergierückgewinnungsanordnung (20) nach einem der vorhergehenden Ansprüche, für die Vorwärmung von Verbrennungsluft (VL) mittels Kesselspeisewasser (KSW) stromauf von einem Rauchgaskanal (2) der Anlage mittels wenigstens eines extern vom Rauchgaskanal angeordneten externen Luftvorwärmers (15, 16), bevor die Verbrennungsluft (VL) via den Rauchgaskanal geleitet wird, insbesondere in Verbindung mit einer Vorwärmung des Kesselspeisewasser mittels Prozessgas auf einer Abkühlstrecke (17) der Anlage, insbesondere bei Dampfreformierungsprozessen, insbesondere in einer Synthesegas-/Wasserstoffanlage mit Zweidampfsystem.

## Claims

1. Method for heat energy recovery in installations comprising at least one reformer (1), in particular in synthesis gas installations having steam reforming means, in which installations at least the following process streams of the installation are interconnected:
combustion air (VL) for the reformer, boiler feed water (KSW) for steam generation, process condensate (PK) on a cooling section (17) of the installation, and flue gas (RG) from the reformer; wherein at least partial evaporation of the process condensate on the cooling section is realized; wherein the flue gas is discharged through a flue gas duct (2) in which heat energy recovery is realized;
and wherein the combustion air is conducted through the flue gas duct prior to being supplied to the reformer for the purpose of heat energy recovery;
**characterized in that**, for the purpose of heat energy recovery, the process condensate (PK) is preheated and/or evaporated on the cooling section (17) by heat exchange with gas generated in the installation (1), in particular synthesis gas (SG), and **in that**, prior to being preheated in the flue gas duct (2), the combustion air (VL) is preheated by heat exchange by means of the boiler feed water (KSW).

2. Method according to Claim 1, wherein heat transfer from the boiler feed water (KSW) to the combustion air (VL) is realized in that the boiler feed water and the combustion air are conducted through at least one external air preheater (15, 16), arranged externally with respect to the flue gas duct, before the boiler feed water is conducted to the flue gas duct (2).

3. Method according to Claim 1 or 2, wherein the boiler feed water (KSW) is conducted via a KSW preheater (14), which is arranged internally in the flue gas duct (2) and is preferably arranged at the end of the flue gas duct.

4. Method according to one of the preceding claims, wherein, in the flue gas duct (2), the flue gas (RG) is conducted through at least one air preheater (13), which is arranged internally in the flue gas duct and is arranged upstream of the/a KSW preheater (14) arranged internally in the flue gas duct.

5. Method according to one of the preceding claims, wherein the preheating or evaporation of the process condensate (PK) on the cooling section (17) is realized in a boiler evaporator (4), which comprises two heat exchanger units and a common steam chamber.

6. Method according to one of the preceding claims, wherein the boiler feed water (KSW) is heated in at least one external KSW preheater (6a) before it is conducted, in particular via a further external air preheater (16), to the flue gas duct (2), in particular in a KSW preheater (6a) arranged on the cooling section (17) by means of process gas.

7. Method according to the preceding claim, wherein, downstream of the external air preheater (15, 16), the boiler feed water (KSW) is subdivided into two parallel partial streams for the purpose of preheating the boiler feed water, specifically into a partial stream to the/a KSW preheater (14) arranged internally in the flue gas duct, and into a partial stream to the external KSW preheater (6a), in particular on the cooling section (17) .

8. Method according to one of the preceding claims, wherein the cooled boiler feed water exiting the/a first external air preheater (15) is reheated and then conducted to a further external air preheater (16), in which heat exchange with the combustion air (VL) is again realized.

9. Method according to one of the three preceding claims, wherein the KSW preheater (6a) is a heat exchanger which is arranged on the cooling section (17) and via which the gas generated in the installation, in particular synthesis gas (SG), is conducted.

10. Logic unit (40) configured for the implementation of a method according to one of the preceding method claims, and configured for the control of volumetric flow rates or for the switching of installation components at at least one external air preheater (15, 16) through which boiler feed water (KSW) and combustion air (VL) are conducted for preheating the combustion air (VL).

11. Heat energy recovery arrangement (20) for installations comprising at least one reformer (1), in particular for synthesis gas installations having steam reforming means, in which installations at least the following process streams of the installation are interconnected: combustion air (VL) for the reformer, boiler feed water (KSW) for steam generation, process condensate (PK) on a cooling section (17) of the installation, and flue gas (RG) from the reformer, which flue gas is discharged through a flue gas duct (2); wherein the heat energy recovery arrangement (20) comprises:
at least one air preheater (15, 16) for the combustion air, which is arranged externally with respect to the flue gas duct;
at least one heat exchanger (4, 6; 6a) for the process condensate or the boiler feed water;
**characterized in that** a heat exchanger (4) for the process condensate (PK) is arranged on the cooling section (17) and is configured for heat energy recovery by way of heat exchange with gas generated in the installation, in particular synthesis gas (SG), and **in that** the external air preheater (15, 16) is configured and arranged for heat exchange between the boiler feed water (KSW) and the combustion air (VL) prior to the preheating thereof in the flue gas duct (2).

12. Heat energy recovery arrangement (20) according to the preceding device claim, wherein the heat exchanger (4) for the process condensate (PK) is a boiler evaporator, which comprises two bundles and a common steam chamber.

13. Heat energy recovery arrangement according to one of the preceding device claims, wherein at least one KSW preheater (14) is arranged internally in the flue gas duct (2), in particular downstream at the end of the flue gas duct, which KSW preheater is arranged in the flow path of the flue gas (RG).

14. Heat energy recovery arrangement according to one of the preceding device claims, wherein a further external air preheater (16) is arranged upstream of an/the internal KSW preheater (14); and/or having a boiler feed water preheater (6a) arranged on the cooling section (17), which is configured for heat exchange between the boiler feed water and process gas, in particular downstream of the external (first) air preheater (15).

15. Use of a heat energy recovery arrangement in installations comprising at least one reformer (1), in particular a heat energy recovery arrangement (20) according to one of the preceding claims, for the preheating of combustion air (VL) by means of boiler feed water (KSW) upstream of a flue gas duct (2) of the installation by means of at least one external air preheater (15, 16), arranged externally with respect to the flue gas duct, before the combustion air (VL) is conducted via the flue gas duct, in particular in conjunction with preheating of the boiler feed water by means of process gas on a cooling section (17) of the installation, in particular during steam reforming processes, in particular in a synthesis gas/hydrogen installation having a two-steam system.

## Revendications

1. Procédé de récupération d'énergie thermique dans des installations comprenant au moins un reformeur (1), en particulier dans des installations de gaz de synthèse avec reformage à la vapeur, installations dans lesquelles au moins les flux de processus suivants de l'installation sont mis en circuit : air de combustion (VL) destiné au reformeur, eau d'alimentation de chaudière (KSW) destinée à la production de vapeur, condensat de processus (PK) sur une section de refroidissement (17) de l'installation, et gaz de fumée (RG) provenant du reformeur ; une évaporation au moins partielle du condensat de processus étant effectuée sur la section de refroidissement ; le gaz de fumée étant évacué par un conduit de fumée (2) dans lequel l'énergie thermique est récupérée ;
et l'air de combustion étant guidé à travers le conduit de gaz de fumée avant d'être amené au reformeur pour la récupération d'énergie thermique ;
**caractérisé en ce que,** afin de récupérer de l'énergie thermique, le condensat de processus (PK) est préchauffé et/ou évaporé sur la section de refroidissement (17) par échange de chaleur avec du gaz généré dans l'installation (1), en particulier du gaz de synthèse (SG), et **en ce que** l'air de combustion (VL) est préchauffé, avant le préchauffage effectué dans le conduit de gaz de fumée (2), par échange de chaleur à l'aide de l'eau d'alimentation de chaudière (KSW).

2. Procédé selon la revendication 1, un transfert de chaleur étant effectué de l'eau d'alimentation de chaudière (KSW) à l'air de combustion (VL) du fait que l'eau d'alimentation de chaudière et l'air de combustion ont été guidés à travers au moins un préchauffeur d'air extérieur (15, 16), disposé à l'extérieur du conduit de gaz de fumée, avant de guider l'eau d'alimentation de chaudière vers le conduit de gaz de fumée (2).

3. Procédé selon la revendication 1 ou 2, l'eau d'alimentation de chaudière (KSW) étant guidée par le biais d'un préchauffeur KSW (14) disposé à l'intérieur du conduit de gaz de fumée (2) et de préférence disposé à l'extrémité du conduit de gaz de fumée.

4. Procédé selon l'une des revendications précédentes, le gaz de fumée (RG) étant guidé dans le conduit de gaz de fumée (2) par le biais d'au moins un préchauffeur d'air (13) disposé à l'intérieur du conduit de gaz de fumée et disposé en amont du ou d'un préchauffeur KSW (14) disposé à l'intérieur du conduit de gaz de fumée.

5. Procédé selon l'une des revendications précédentes, le préchauffage ou l'évaporation du condensat de processus (PK) étant effectué sur la section de refroidissement (17) dans un évaporateur de chaudière (4) comprenant deux unités d'échangeur de chaleur et un espace de vapeur commun.

6. Procédé selon l'une des revendications précédentes, l'eau d'alimentation de chaudière (KSW) étant chauffée dans au moins un préchauffeur KSW extérieur (6a) avant d'être guidée notamment par le biais d'un autre préchauffeur d'air extérieur (16) vers le conduit de gaz de fumée (2), notamment dans un préchauffeur KSW (6a) disposé sur la section de refroidissement (17) au moyen de gaz de processus.

7. Procédé selon la revendication précédente, l'eau d'alimentation de chaudière (KSW) étant divisée en aval du préchauffeur d'air extérieur (15, 16) en deux flux partiels parallèles destinés à préchauffer l'eau d'alimentation de chaudière, à savoir un flux partiel dirigé vers le ou un préchauffeur KSW disposé à l'intérieur du conduit de gaz de fumée (14) et un flux partiel dirigé vers le préchauffeur KSW extérieur (6a), notamment sur la section de refroidissement (17).

8. Procédé selon l'une des revendications précédentes, l'eau d'alimentation de chaudière refroidie qui sort du ou d'un premier préchauffeur d'air extérieur (15) étant réchauffée puis guidée vers un autre préchauffeur d'air extérieur (16) dans lequel un nouvel échange de chaleur est effectué avec l'air de combustion (VL).

9. Procédé selon l'une des trois revendications précédentes, le préchauffeur KSW (6a) étant un échangeur de chaleur disposé sur la section de refroidissement (17) et guidant le gaz généré dans l'installation, en particulier le gaz de synthèse (SG).

10. Unité logique (40) conçue pour mettre en œuvre un procédé selon l'une des revendications précédentes, pour commander des débits volumiques ou commuter des composants d'installation sur au moins un préchauffeur d'air extérieur (15, 16) traversé par de l'eau d'alimentation de chaudière (KSW) et de l'air de combustion (VL) pour préchauffer de l'air de combustion (VL) .

11. Dispositif de récupération d'énergie thermique (20) destiné à des installations comprenant au moins un reformeur (1), en particulier des installations à gaz de synthèse avec reformage à la vapeur, installations dans lesquelles au moins les flux de processus suivants de l'installation sont mis en circuit : de l'air de combustion (VL) destiné au reformeur, de l'eau d'alimentation de chaudière (KSW) destinée à la production de vapeur, le condensat de processus (PK) sur une section de refroidissement (17) de l'installation, et le gaz de fumée (RG) provenant du reformeur, qui est évacué par un conduit de gaz de fumée (2) ; l'ensemble de récupération d'énergie thermique (20) comprenant :
au moins un préchauffeur d'air (15, 16) destiné à l'air de combustion et disposé à l'extérieur du conduit de gaz de fumée ;
au moins un échangeur de chaleur (4, 6 ; 6a) destiné au condensat de processus ou à l'eau d'alimentation de chaudière ;
**caractérisé en ce qu'**un échangeur de chaleur (4) destiné au condensat de processus (PK) est disposé sur la section de refroidissement (17) et est conçu pour récupérer de l'énergie thermique par échange de chaleur avec du gaz généré dans l'installation, en particulier du gaz de synthèse (SG), et **en ce que** le préchauffeur d'air extérieur (15, 16) est conçu et agencé pour l'échange de chaleur entre l'eau d'alimentation de chaudière (KSW) et l'air de combustion (VL) avant de préchauffer celui-ci dans le conduit de gaz de fumée (2) .

12. Dispositif de récupération d'énergie thermique (20) selon la revendication précédente, l'échangeur de chaleur (4) destiné au condensat de processus (PK) étant un évaporateur de chaudière qui comporte deux assemblages et un espace de vapeur commun.

13. Dispositif de récupération d'énergie thermique selon l'une des revendications précédentes, au moins un préchauffeur KSW (14) étant disposé à l'intérieur du conduit de gaz de fumée (2), en particulier en aval à l'extrémité du conduit de gaz de fumée, lequel préchauffeur KSW est disposé dans le chemin d'écoulement du gaz de fumée (RG).

14. Dispositif de récupération d'énergie thermique selon l'une des revendications précédentes, un autre préchauffeur d'air extérieur (16) étant disposé en amont du ou d'un préchauffeur KSW intérieur (14) ; et/ou un préchauffeur d'eau d'alimentation de chaudière (6a) disposé sur la section de refroidissement (17) étant conçu pour l'échange de chaleur entre l'eau d'alimentation de chaudière et le gaz de processus, en particulier en aval du (premier) préchauffeur d'air extérieur (15).

15. Utilisation d'un dispositif de récupération d'énergie thermique dans des installations comprenant au moins un reformeur (1), notamment un dispositif de récupération d'énergie thermique (20) selon l'une des revendications précédentes, pour préchauffer de l'air de combustion (VL) au moyen d'eau d'alimentation de chaudière (KSW) en amont d'un conduit de gaz de fumée (2) de l'installation au moyen d'au moins un préchauffeur d'air extérieur (15, 16) disposé à l'extérieur du conduit de gaz de fumée avant de guider l'air de combustion (VL) par le biais du conduit de gaz de fumée, notamment en liaison avec le préchauffage de l'eau d'alimentation de chaudière au moyen de gaz de processus sur une section de refroidissement (17) de l'installation, notamment dans des processus de reformage à la vapeur, notamment dans une installation à gaz de synthèse/hydrogène avec système à deux vapeurs.
